# EUROPEAN PATENT SPECIFICATION

(11) **EP 2 950 462 B1**
(45) Date of publication and mention of the grant of the patent: **29.04.2020**
(21) Application number: 14743103.5
(22) Date of filing: 23.01.2014
(51) Int. Cl.: H04B 7/26, H04L 5/00, H04B 1/00, H04L 5/14, H04W 88/08, H04L 27/26

(54) **METHOD AND DEVICE FOR MEASURING CHANNEL BETWEEN BASE STATIONS IN WIRELESS COMMUNICATION SYSTEM**
VERFAHREN UND VORRICHTUNG ZUR KANALMESSUNG ZWISCHEN BASISSTATIONEN IN EINEM DRAHTLOSEN KOMMUNIKATIONSSYSTEM
PROCÉDÉ ET DISPOSITIF PERMETTANT DE MESURER UN CANAL ENTRE DES STATIONS DE BASE DANS UN SYSTÈME DE COMMUNICATION SANS FIL

(30) Priority: 25.01.2013 US 201361757089 P; 29.01.2013 US 201361758265 P
(43) Date of publication of application: 02.12.2015
(73) Proprietor: LG Electronics Inc., Seoul 150-721 (KR)
(72) Inventor: CHAE, Hyukjin, Seoul 137-893 (KR); SEO, Hanbyul, Seoul 137-893 (KR); LEE, Seungmin, Seoul 137-893 (KR)
(74) Representative: Katérle, Axel
(86) International application number: PCT/KR2014/000667
(87) International publication number: WO 2014/116039

(56) References cited:
- EP-A1- 1 463 367
- WO-A1-2013/006197
- WO-A2-2012/041422
- WO-A2-2012/124931
- US-A1- 2011 176 435
- MITSUBISHI ELECTRIC: "Discussion on over-the-air communication for CoMP", 3GPP DRAFT; R1-091147, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Seoul, Korea; 20090318, 18 March 2009 (2009-03-18), XP050338771, [retrieved on 2009-03-18]
- INTEL CORPORATION: "Discussion on Interference Mitigation Schemes for LTE-TDD eIMTA", 3GPP DRAFT; R1-130084 - INTEL - INTERFERENCE MITIGATION SCHEMES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. St Julian; 20130128 - 20130201 19 January 2013 (2013-01-19), XP050663531, Retrieved from the Internet: URL:http://www.3gpp.org/ftp/tsg_ran/WG1_RL 1/TSGR1_72/Docs/ [retrieved on 2013-01-19]
- '3GPP; TSGRAN; E-UTRA; Further enhancements to LTE Time Division Duplex (TDD) for Downlink-Uplink(DL-UL) interference management and traffic adaptation (Release 11)' 3GPP TR 36.828 V11.0.0 June 2012, pages 99 - 103, XP050916151 Retrieved from the Internet: <URL:http://www.3gpp.org/DynaReport/36828.h tm>

## Description

### [Technical Field]

The present disclosure relates to a wireless communication system, and more particularly, to a method and device for measuring a channel between base stations.

### [Background Art]

Wireless communication systems are widely deployed to provide various kinds of communication content such as voice and data services. Generally, these communication systems are multiple access systems capable of supporting communication with multiple users by sharing available system resources (e.g., bandwidth and transmission power). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency-division multiple access (SC-FDMA) system, and a multi-carrier frequency division multiple access (MC-FDMA) system.

MITSUBISHI ELECTRIC: "Discussion on over-the-air communication for CoMP", 3GPP DRAFT; R1-091147, 3RD GENERATION PARTNERSHIP PROJECT (3GPP), MOBILE COMPETENCE CENTRE; no. Seoul, Korea; 20090318, 18 March 2009 relates to a backhaul structure for RN coordination. In the backhaul frame structure, each RN-eNB link uses distributed comb subbands without overlapping. As a result, eNB can achieve carrier phase synchronization with multiple RNs simultaneously.

INTEL CORPORATION: "Discussion on Interference Mitigation Schemes for LTE-TDD eIMTA", 3GPP DRAFT; R1-130084-INTEL-INTERFERENCE MITIGATION SCHEMES, 3RD GENERATION PARTNERSHIP PROJECT (3GPP), vol. RAN WG1, no. St Julian; 19 January 2013 discloses advanced eNB interference cancellation such as spatial interference cancelation at the TX and RX side, successive interference cancellation, etc. For example, if one eNB controls operation of coupled cells, the victim cell receiving UL signal may be aware about the signal transmitted by the neighboring aggressor cell and may utilize this knowledge for cancellation of DL-UL interference.

### [Disclosure]

### [Technical Problem]

An object of the present disclosure devised to solve the problem lies in technologies related to a method for measuring a channel between base stations in a time division duplex (TDD) system.

It is to be understood that technical objects to be achieved by the present disclosure are not limited to the aforementioned technical objects and other technical objects which are not mentioned herein will be apparent from the following description to one of ordinary skill in the art to which the present disclosure pertains.

### [Technical Solution]

According to a first aspect of the present disclosure, provided herein is a method, in accordance with claim 1, for measuring a channel to a second base station by a first base station in a wireless communication system, the method including receiving, in a first subframe, a reference signal transmitted from the second base station; and measuring the channel to the second base station based on the reference signal, wherein the first subframe is a subframe indicated for uplink use by system information and switched to downlink use by the second base station. The embodiments which do not fall within the scope of the claims are to be interpreted as examples useful for understanding the invention.

According to a second aspect of the present disclosure, provided herein is a first base station for measuring a channel to a second base station in a wireless communication system, the first base station including a transmit module; and a processor, wherein the processor is configured to receive, in a first subframe, a reference signal transmitted from the second base station; and measure the channel to the second base station based on the reference signal, wherein the first subframe is a subframe indicated for uplink use by system information and switched to downlink use by the second base station.

The first and second aspects of the present disclosure may include all/some of elements disclosed below.

When the first base station and the second base station perform transmission and reception of a signal other than the reference signal with each user equipment in the first subframe, the reference signal may be transmitted by applying timing advance.

The timing advance may be delivered from the first base station.

The timing advance may be delivered to user equipments belonging to the second base station though higher layer signaling.

When the first base station receives a signal from a user equipment in the first subframe, and the second base station does not transmit a signal except the reference signal in the first subframe, the reference signal may be related to an uplink reference signal.

The uplink reference signal may include a sounding reference signal, a demodulation reference signal, and a random access-related signal.

The second base station may signal, to user equipments belonging to the second base station, that only the reference signal is transmitted in the first subframe.

When user equipments of the first base station do not transmit an uplink signal in the first subframe, and the second base station transmits a signal other than the reference signal to a user equipment in the first subframe, the reference signal may be related to a downlink reference signal.

The downlink reference signal may include a cell-specific reference signal, a channel state information reference signal, and a demodulation reference signal.

User equipments of the first base station may not transmit an uplink signal in the first subframe, and the second base station may not transmit a signal except the reference signal in the first subframe.

When timing advance is not applied to transmission of the reference signal, the reference signal may correspond to a sequence related to a sounding reference signal and transmitted over at least one symbol.

The at least one symbol may differ between base stations transmitting a reference signal.

A subframe immediately before the subframe may be at least one of a subframe configured for uplink use and a special subframe.

An extended cyclic prefix (CP) may be used for the first subframe.

### [Advantageous Effects]

According to embodiments of the present disclosure, a channel between base stations may be efficiently measured, and thus interference may be handled based on such measurement.

It will be appreciated by those skilled in the art that the effects that can be achieved with the present disclosure are not limited to what has been described above and other advantages of the present disclosure will be clearly understood from the following detailed description taken in conjunction with the accompanying drawings.

### [Description of Drawings]

The accompanying drawings, which are included to provide a further understanding of the disclosure, illustrate embodiments of the disclosure and together with the description serve to explain the principle of the disclosure. In the drawings:
FIG. 1 illustrates a radio frame structure;
FIG. 2 is a diagram illustrating a resource grid for one downlink (DL) slot;
FIG. 3 is a diagram illustrating a DL subframe structure;
FIG. 4 is a diagram illustrating an uplink (UL) subframe structure;
FIG. 5 illustrates a reference signal;
FIGs. 6 and 7 illustrate measurement between base stations according to one embodiment of the present disclosure;
FIG. 8 is a diagram illustrating configurations of transceivers.

### [Best Mode]

The embodiments described below are constructed by combining elements and features of the present disclosure in a predetermined form. The elements or features may be considered optional unless explicitly mentioned otherwise. Each of the elements or features can be implemented without being combined with other elements. In addition, some elements and/or features may be combined to configure an embodiment of the present disclosure. The sequential order of the operations discussed in the embodiments of the present disclosure may be changed. Some elements or features of one embodiment may also be included in another embodiment, or may be replaced by corresponding elements or features of another embodiment.

Embodiments of the present disclosure will be described focusing on a data communication relationship between a base station and a terminal. The base station serves as a terminal node of a network over which the base station directly communicates with the terminal. Specific operations illustrated as being conducted by the base station in this specification may be conducted by an upper node of the base station, as necessary.

That is, it is obvious that various operations performed to implement communication with the terminal over a network composed of multiple network nodes including a base station can be conducted by the base station or network nodes other than the base station. The term "base station (BS)" may be replaced with terms such as "fixed station," "Node-B," "eNode-B (eNB)," and "access point." The term "relay" may be replaced with such terms as "relay node (RN)" and "relay station (RS)". The term "terminal" may also be replaced with such terms as "user equipment (UE)," "mobile station (MS)," "mobile subscriber station (MSS)" and "subscriber station (SS)."

It should be noted that specific terms used in the description below are intended to provide better understanding of the present disclosure, and these specific terms may be changed to other forms within the technical spirit of the present disclosure.

In some cases, well-known structures and devices may be omitted or block diagrams illustrating only key functions of the structures and devices may be provided, so as not to obscure the concept of the present disclosure. The same reference numbers will be used throughout this specification to refer to the same or like parts.

Exemplary embodiments of the present disclosure can be supported by standard documents for at least one of wireless access systems including an institute of electrical and electronics engineers (IEEE) 802 system, a 3rd generation partnership project (3GPP) system, a 3GPP long term evolution (LTE) system, an LTE-advanced (LTE-A) system, and a 3GPP2 system. That is, steps or parts which are not described in the embodiments of the present disclosure so as not to obscure the technical spirit of the present disclosure may be supported by the above documents. All terms used herein may be supported by the aforementioned standard documents.

The embodiments of the present disclosure described below can be applied to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA may be embodied through radio technologies such as universal terrestrial radio access (UTRA) or CDMA2000. TDMA may be embodied through radio technologies such as global system for mobile communication (GSM)/general packet radio service (GPRS)/enhanced data rates for GSM evolution (EDGE). OFDMA may be embodied through radio technologies such as IEEE 802.11 (Wi-Fi), IEEE 802.16 (WiMAX), IEEE 802-20, and evolved UTRA (E-UTRA). UTRA is a part of the universal mobile telecommunications system (UMTS). 3rd generation partnership project (3GPP) long term evolution (LTE) is a part of evolved UMTS (E-UMTS), which uses E-UTRA. 3GPP LTE employs OFDMA for downlink and employs SC-FDMA for uplink. LTE-Advanced (LTE-A) is an evolved version of 3GPP LTE. WiMAX can be explained by IEEE 802.16e standard (WirelessMAN-OFDMA reference system) and advanced IEEE 802.16m standard (WirelessMAN-OFDMA Advanced system). For clarity, the following description focuses on 3GPP LTE and 3GPP LTE-A systems. However, the spirit of the present disclosure is not limited thereto.

### LTE/LTE-A Resource Structure/Channel

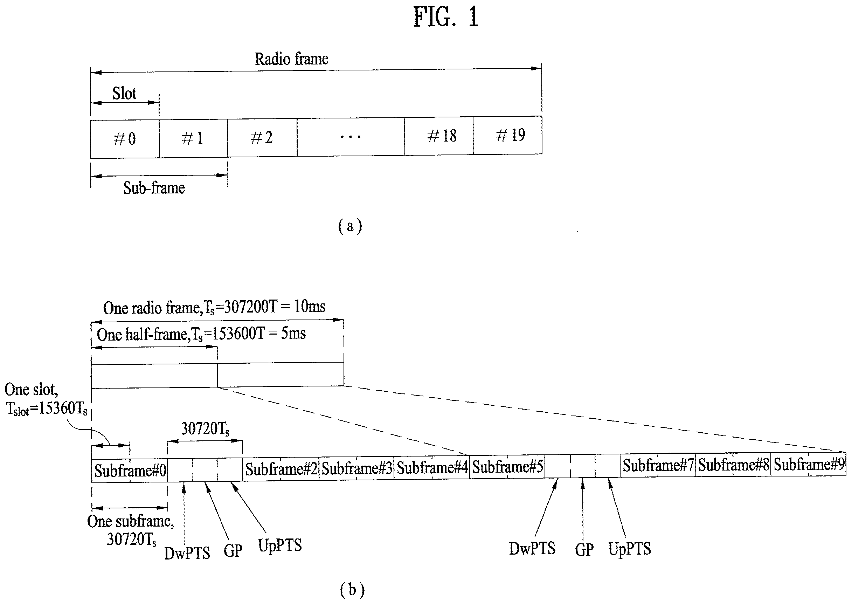

Hereinafter, a radio frame structure will be described with reference to Fig. 1.

In a cellular OFDM wireless packet communication system, an uplink (UL)/downlink (DL) data packet is transmitted on a subframe-by-subframe basis, and one subframe is defined as a predetermined time interval including a plurality of OFDM symbols. 3GPP LTE supports radio frame structure type 1 applicable to frequency division duplex (FDD) and radio frame structure type 2 applicable to time division duplex (TDD).

Fig. 1(a) illustrates radio frame structure type 1. A downlink radio frame is divided into 10 subframes. Each subframe includes two slots in the time domain. The duration of transmission of one subframe is defined as a transmission time interval (TTI). For example, a subframe may have a duration of 1 ms and one slot may have a duration of 0.5 ms. A slot may include a plurality of OFDM symbols in the time domain and a plurality of resource blocks (RBs) in the frequency domain. Since 3GPP LTE employs OFDMA for downlink, an OFDM symbol represents one symbol period. An OFDM symbol may be referred to as an SC-FDMA symbol or symbol period. A resource block (RB), which is a resource allocation unit, may include a plurality of consecutive subcarriers in a slot.

The number of OFDM symbols included in one slot depends on the configuration of a cyclic prefix (CP). CPs are divided into an extended CP and a normal CP. For a normal CP configuring each OFDM symbol, each slot may include 7 OFDM symbols. For an extended CP configuring each OFDM symbol, the duration of each OFDM symbol is extended and thus the number of OFDM symbols included in a slot is smaller than in the case of the normal CP. For the extended CP, each slot may include, for example, 6 OFDM symbols. When a channel state is unstable as in the case of high speed movement of a UE, the extended CP may be used to reduce inter-symbol interference.

When the normal CP is used, each slot includes 7 OFDM symbols, and thus each subframe includes 14 OFDM symbols. In this case, the first two or three OFDM symbols of each subframe may be allocated to a physical downlink control channel (PDCCH) and the other OFDM symbols may be allocated to a physical downlink shared channel (PDSCH).

Fig. 1(b) illustrates radio frame structure type 2. A type-2 radio frame includes two half frames, each of which has 5 subframes, downlink pilot time slots (DwPTSs), guard periods (GPs), and uplink pilot time slots (UpPTSs). Each subframe consists of two slots. The DwPTS is used for initial cell search, synchronization, or channel estimation in a UE, whereas the UpPTS is used for channel estimation in an eNB and UL transmission synchronization of a UE. The GP is provided to eliminate UL interference caused by multipath delay of a DL signal between DL and UL. Regardless of the types of radio frames, a subframe consists of two slots.

The illustrated radio frame structures are merely examples, and various modifications may be made to the number of subframes included in a radio frame, the number of slots included in a subframe, or the number of symbols included in a slot.

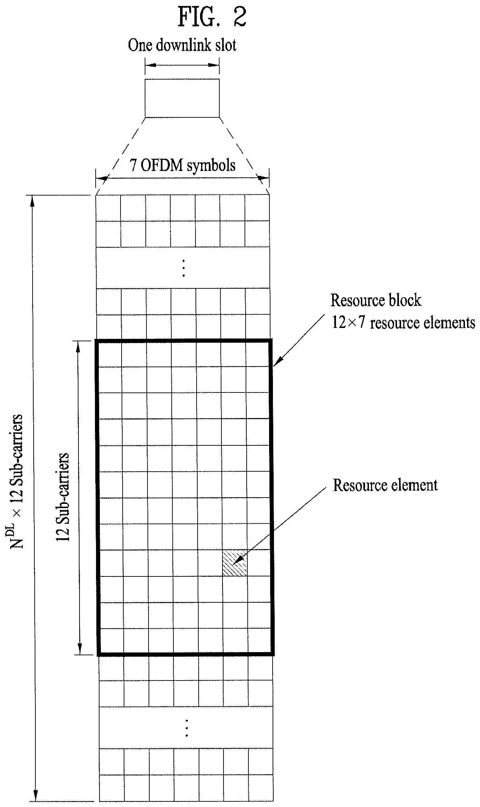

Fig. 2 illustrates a resource grid in a downlink slot. One DL slot includes 7 OFDM symbols in the time domain and an RB includes 12 subcarriers in the frequency domain. However, embodiments of the present disclosure are not limited thereto. For the normal CP, a slot may include 7 OFDM symbols. For the extended CP, a slot may include 6 OFDM symbols. Each element in the resource grid is referred to as a resource element (RE). An RB includes 12 7 REs. The number NDL of RBs included in a DL slot depends on a DL transmission bandwidth. A UL slot may have the same structure as the DL slot.

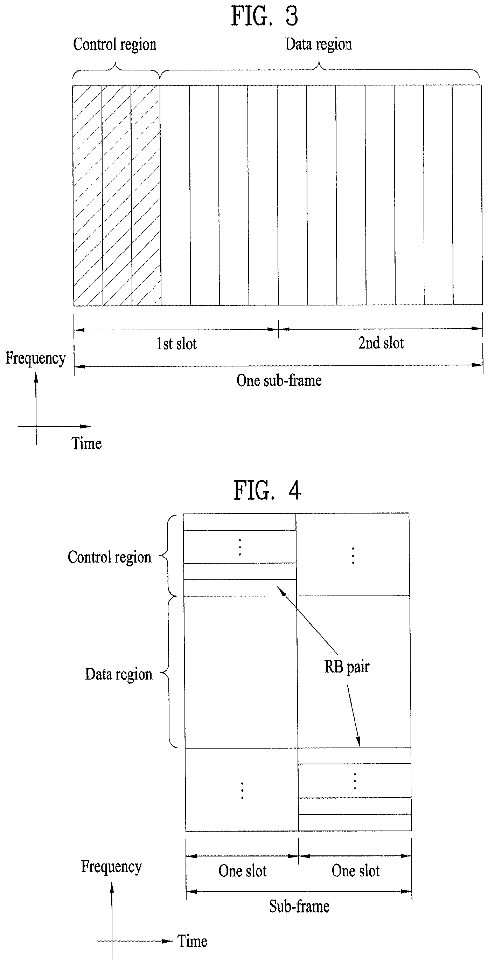

Fig. 3 illustrates a structure of a downlink subframe. Up to three OFDM symbols in the leading part of the first slot in a DL subframe corresponds to a control region to which a control channel is allocated. The other OFDM symbols of the DL subframe correspond to a data region to which a PDSCH is allocated. DL control channels used in 3GPP LTE include, for example, a physical control format indicator channel (PCFICH), a physical downlink control channel (PDCCH), and a physical hybrid automatic repeat request (HARQ) indicator channel (PHICH). The PCFICH is transmitted in the first OFDM symbol of a subframe, carrying information about the number of OFDM symbols used for transmission of control channels in the subframe. The PHICH carries a HARQ ACK/NACK signal in response to uplink transmission. Control information carried on the PDCCH is called downlink control information (DCI). The DCI includes UL or DL scheduling information or a UL transmit power control command for a UE group. The PDCCH may deliver information about the resource allocation and transport format of a DL shared channel (DL-SCH), resource allocation information of a UL shared channel (UL-SCH), paging information of a paging channel (PCH), system information on the DL-SCH, information about resource allocation for a higher-layer control message such as a random access response transmitted on the PDSCH, a set of transmit power control commands for individual UEs in a UE group, transmit power control information, and voice over internet protocol (VoIP) activation information. A plurality of PDCCHs may be transmitted in the control region. A UE may monitor a plurality of PDCCHs. A PDCCH is transmitted in an aggregation of one or more consecutive control channel elements (CCEs). A CCE is a logical allocation unit used to provide a PDCCH at a coding rate based on the state of a radio channel. A CCE corresponds to a plurality of RE groups. The format of a PDCCH and the number of available bits for the PDCCH are determined depending on the correlation between the number of CCEs and the coding rate provided by the CCEs. An eNB determines the PDCCH format according to DCI transmitted to a UE and adds a cyclic redundancy check (CRC) to the control information. The CRC is masked with an identifier (ID) known as a radio network temporary identifier (RNTI) according to the owner or usage of the PDCCH. If the PDCCH is directed to a specific UE, its CRC may be masked with a cell-RNTI (C-RNTI) of the UE. If the PDCCH is for a paging message, the CRC of the PDCCH may be masked with a paging radio network temporary identifier (P-RNTI). If the PDCCH delivers system information (more specifically, a system information block (SIB)), the CRC may be masked with a system information ID and a system information RNTI (SI-RNTI). To indicate a random access response which is a response to a random access preamble transmitted by a UE, the CRC may be masked with a random access-RNTI (RA-RNTI).

Fig. 4 illustrates a structure of an uplink subframe. A UL subframe may be divided into a control region and a data region in the frequency domain. A physical uplink control channel (PUCCH) carrying uplink control information is allocated to the control region. A physical uplink shared channel (PUSCH) carrying user data is allocated to the data region. To maintain single carrier property, a UE does not simultaneously transmit a PUSCH and a PUCCH. A PUCCH for a UE is allocated to an RB pair in a subframe. The RBs from an RB pair occupy different subcarriers in two slots. This is called frequency hopping of the RB pair allocated to the PUCCH over a slot boundary.

### Reference Signal (RS)

In a radio communication system, since packets are transmitted through a radio channel, a signal may be distorted during transmission. In order to enable a receiving end to correctly receive the distorted signal, the distortion of the received signal should be corrected by using channel information. In order to detect the channel information, a method of detecting channel information by transmitting a signal, which is known by both the transmitting end and the receiving end, and by using a level of distortion, which occurs when the signal is being received through a channel, is generally used. The signal is also referred to as a Pilot Signal or a Reference Signal (RS).

When transmitting and receiving data using multiple antennae, the channel status of each transmission antenna and each reception antenna should be known in order to correctly receive the signal. Accordingly, a separate reference signal should exist for each transmission antenna and, more specifically, for each antenna port.

The reference signal may be divided into an uplink reference signal and a downlink reference signal. In the current LTE system, uplink reference signals may include
i) a DeModulation-Reference Signal (DM-RS) for performing channel estimation for a coherent demodulation of the information being transmitted through PUSCH and PUCCH
ii) a Sounding Reference Signal (SRS) for allowing the base station to measure uplink channel quality at a frequency belonging to a different network.

Meanwhile, the downlink reference signal may include:
i) a Cell-specific Reference Signal (CRS), which is shared by all user equipments within the cell;
ii) a UE-specific Reference Signal designated only to a specific user equipment;
iii) a DeModulation-Reference Signal (DM-RS) for a coherent demodulation in case a PDSCH is being transmitted;
iv) a Channel State Information-Reference Signal (CSI-RS) for delivering Channel State Information (CSI) in case a downlink DMRS is being transmitted;
v) a MBSFN Reference Signal being transmitted for a coherent demodulation respective to a signal, which is being transmitted in a MBSFN (Multimedia Broadcast Single Frequency Network) mode;
vi) a Positioning Reference Signal being used for estimating geographical position information of the user equipment.

A reference signal may be broadly divided into two different types in accordance with its purpose. There is a reference signal having the purpose of channel information acquisition, and there is a reference signal for data demodulation. Since the former has the purpose of allowing the UE to acquire channel information transmitted via downlink, it shall be transmitted through a wideband, and even a UE that does not receive downlink data in a specific subframe is required to receive this reference signal. Additionally, this is also used in situations, such as a handover situation. The latter corresponds to a reference signal that is transmitted along with a resource respective to a downlink, when the base station transmits a downlink, and by receiving the corresponding reference signal the UE may demodulate data by performing channel measurement. This reference signal shall be transmitted to a region (or section) to which data are being transmitted.

The CRS is used for two different purposes, such as channel information acquisition and data demodulation, and a UE-specific reference signal is only used for the purpose of data demodulation. The CRS is transmitted at each subframe with respect to the wideband, and, depending upon the number of transmission antennae of the base station, reference signals may be transmitted with respect to a maximum of 4 antenna ports.

For example, if the number of transmission antennae of the base station is 2, CRSs respective to antenna ports No. 0 and No. 1 are transmitted, and, in case the number of transmission antennae is equal to 4, CRSs respective to antenna port Nos. 0 to 3 are transmitted.

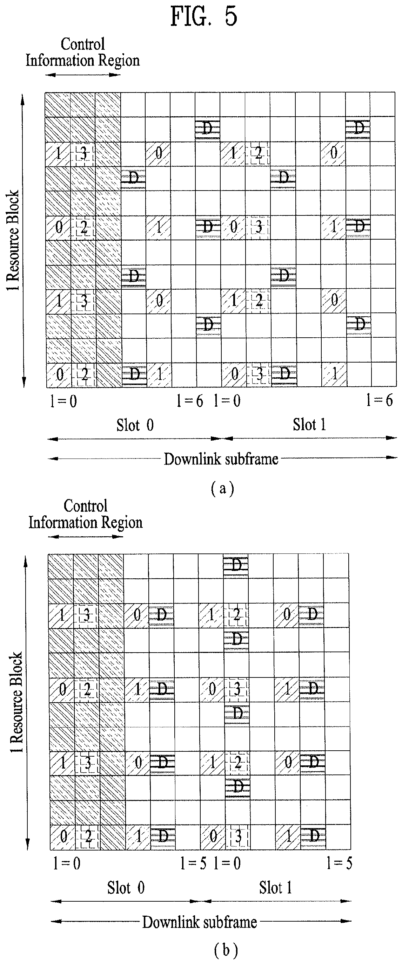

Fig. 5 illustrates a pattern according to which a CRS and a DRS, which are defined in the legacy 3GPP LTE system (e.g., Release-8), are mapped within a downlink resource block pair (RB pair). A downlink resource block pair, which corresponds to a unit to which a reference signal is mapped, may be expressed as one subframe in time x 12 subcarriers in frequency. More specifically, in the time domain, one resource block pair has a length of 14 OFDM symbols, in case of a general CP (Fig. 5(a)), and has a length of 12 OFDM symbols, in case of an extended CP (Fig. 5(b)).

Fig. 5 illustrates a position of a reference signal within a resource block pair in a system, wherein the base station supports 4 transmission antennae. In Fig. 5, the resource elements (REs) that are marked as '0', '1', '2', and '3' respectively indicate each of the CRS positions corresponding to antenna port indexes 0, 1, 2, and 3. Meanwhile, in Fig. 5, the resource elements that is marked as 'D' indicates the position of a DMRS.

### Enhanced Interference Management and Traffic Adaptation (eIMTA)

Referring to FIG. 1 in relation to TDD mentioned above, subframes (except for a special subframe for switching between UL and DL) of radio frame structure type 2 of TDD may be respectively preconfigured to be used for either uplink or downlink in the LTE/LTE-A system. For example, referring Table 1 below, in the case of uplink-downlink configuration 0, subframe Nos. 0 and 5 are preconfigured to be used for downlink in a radio frame, and subframe Nos. 2, 3, 4, 7, 8 and 9 are preconfigured to be used for uplink in a radio frame.

An uplink-downlink configuration for a specific eNB to use may be provided to a UE as a part of system information. In this case, neighboring eNBs may be forced to use the same TDD configuration, namely the same uplink-downlink configuration for a reason such as interference.

**TABLE 1**

| Uplink-downlink configuration | Downlink-to-Uplink Switch periodicity (ms) | Subframe number | | | | | | | | | |
|---|---|---|---|---|---|---|---|---|---|---|---|
| | | 0 | 1 | 2 | 3 | 4 | 5 | 6 | 7 | 8 | 9 |
| 0 | 5 | D | S | U | U | U | D | S | U | U | U |
| 1 | 5 | D | S | U | U | D | D | S | U | U | D |
| 2 | 5 | D | S | U | D | D | D | S | U | D | D |
| 3 | 10 | D | S | U | U | U | D | D | D | D | D |
| 4 | 10 | D | S | U | U | D | D | D | D | D | D |
| 5 | 10 | D | S | U | D | D | D | D | D | D | D |

| | | | | | | | | | | | |
|---|---|---|---|---|---|---|---|---|---|---|---|
| (D: Subframe for downlink transmission, U: Subframe for uplink transmission, S: Special subframe) | | | | | | | | | | | |

If the amount of data transmitted on uplink or downlink drastically increases when a system is operated according to uplink-downlink configurations as shown in Table 1, at least one subframe configured for uplink may be changed to a subframe for downlink or at least one subframe configured for downlink may be changed/switched to a subframe for uplink in order to ensure smooth transmission of data.

### Channel State Information (CSI) Feedback

MIMO schemes may be classified into an open-loop MIMO scheme and a closed-loop MIMO scheme. In the open-loop MIMO scheme, a MIMO transmitter performs MIMO transmission without receiving CSI feedback from a MIMO receiver. In the closed-loop MIMO scheme, the MIMO transmitter receives CSI feedback from the MIMO receiver and then performs MIMO transmission. In the closed-loop MIMO scheme, each of the transmitter and the receiver may perform beamforming based on CSI to achieve a multiplexing gain of MIMO transmit antennas. To allow the receiver (e.g., a UE) to feed back CSI, the transmitter (e.g., an eNB) may allocate a UL control channel or a UL-SCH to the receiver.

The CSI feedback may include a rank indicator (RI), a precoding matrix index (PMI), and a channel quality indicator (CQI).

The RI is information about a channel rank. The channel rank indicates the maximum number of layers (or streams) that may carry different information in the same time-frequency resources. Since the rank is determined mainly according to long-term fading of a channel, the RI may be fed back in a longer period than the PMI and the CQI.

The PMI is information about a precoding matrix used for transmission of a transmitter and has a value reflecting the spatial characteristics of a channel. Precoding refers to mapping of transmission layers to transmit antennas. A layer-antenna mapping relationship may be determined according to a precoding matrix. The PMI is the index of an eNB precoding matrix preferred by the UE based on a metric such as signal-to-interference-plus-noise ratio (SINR). In order to reduce feedback overhead of precoding information, the transmitter and the receiver may pre-share a codebook including multiple precoding matrices, and only the index indicating a specific precoding matrix in the codebook may be fed back.

In a system supporting an extended antenna configuration (e.g. an LTE-A system), additional acquisition of multi user-multiple input multiple output (MU-MIMO) diversity using an MU-MIMO scheme is considered. In the MU-MIMO scheme, when an eNB performs downlink transmission using CSI fed back by one UE among multiple users, it is necessary to prevent interference with other UEs because there is an interference channel between UEs multiplexed in the antenna domain. Accordingly, CSI of higher accuracy than CSI in a single-user (SU)-MIMO scheme should be fed back in order to correctly perform MU-MIMO operation.

A new CSI feedback scheme may be adopted by modifying conventional CSI including an RI, a PMI, and a CQI so as to more accurately measure and report CSI. For example, precoding information fed back by the receiver may be indicated by a combination of two PMIs. One of the two PMIs (a first PMI) has a long-term and/or wideband property, and may be referred to as W1. The other PMI (a second PMI) has a short-term and/or subband property, and may be referred to as W2. A final PMI may be determined by a combination (or a function) of W1 and W2. For example, if the final PMI is denoted by W, W=W1^{∗}W2 or W=W2^{∗}W1.

The CQI is information indicating channel quality or channel strength. The CQI may be expressed as an index corresponding to a predetermined modulation and coding scheme (MCS) combination. That is, a CQI index that is fed back indicates a corresponding modulation scheme and code rate. In general, the CQI has a value reflecting a reception SINR that can be achieved when an eNB configures a spatial channel using the PMI.

The CSI feedback scheme is divided into periodic reporting over a physical uplink control channel (PUCCH) and aperiodic reporting over a PUSCH, which is an uplink data channel, according to a request from an eNB.

### Channel Estimation between eNBs

As in the case of channel estimation/measurement and reporting between a UE and eNB by the UE, channel estimation may also be needed between eNBs. For example, channel estimation between eNBs may be required in order to control interference between the eNBs. As a specific example, when subframe usage changes in the TDD system as described above, interference between eNBs may occur. In this case, channel estimation between the eNBs is needed. In another case, when usage of a subframe changes from the UL subframe to DL subframe in the FDD system, interference between eNBs may occur. For these reasons, channel estimation between eNBs is needed. Channel estimation between eNBs may be performed using a reference signal defined in the legacy LTE/LTE-A system. Hereinafter, a method for channel estimation in the TDD system will be described.

The following details will be applied throughout the description given below. A first eNB serves to receive a reference signal from another eNB (a second eNB) in a first subframe and estimate a channel between the first eNB and the second eNB. Herein, the first subframe may be a subframe indicated for uplink use in the system information and switched to downlink use by the second eNB. More specifically, the first eNB and the second eNB may generally use the same uplink-downlink configuration to operate the TDD system. Accordingly, in order for the second eNB to transmit a reference signal and for the first eNB to receive the same, the second eNB needs to switch the usage of a subframe from UL subframe to DL subframe. That is, if the second eNB transmits a reference signal by changing a specific UL subframe to a DL subframe, the first eNB may receive the reference signal from the second eNB in the specific UL subframe (of course, the first eNB may receive the reference signal by switching a DL subframe to a UL subframe. In this case, all/a part of the description given below may be applied). Alternatively, regardless of uplink-downlink configuration of an eNB, a predetermined subframe may be set to an MBSFN or ABS subframe for channel estimation between eNBs, and announced to the UE and eNBs participating in channel estimation. Meanwhile, when an inter-eNB transmission time, periodicity and ID of a reference signal and information about the reference signal (e.g., an SRS configuration, a random access channel (RACH) configuration employed when a comb pattern, bandwidth, hopping bandwidth, and RACH are used, frequency offset information, a port number for CRS/DMRS/CSI-RS, a sequence ID, etc.) may be pre-shared through backhaul. Sharing such information may be performed according to a request from an eNB transmitting the reference signal or an eNB receiving the reference signal.

Sharing of a reference signal, subframe configuration information, and transmission/reception of a reference signal may be employed not only for channel estimation but also for synchronization of time and frequency between eNBs. For example, if a PSS/SSS and CRS are used, the reference signal between eNBs may be used for estimation and compensation of synchronization between eNBs. Direct synchronization estimation between eNBs may be particularly important in an environment where small cells are installed. In this environment, some small cells may not be allowed to assume an ideal backhaul network, and cannot utilize GPS as they are often installed indoors. Thereby, accurate synchronization (particularly, a subframe boundary) between one eNB and a neighboring eNB may not be achieved. In this case, synchronization between eNBs may be performed by transmitting and receiving a reference signal via an air interface between eNBs.

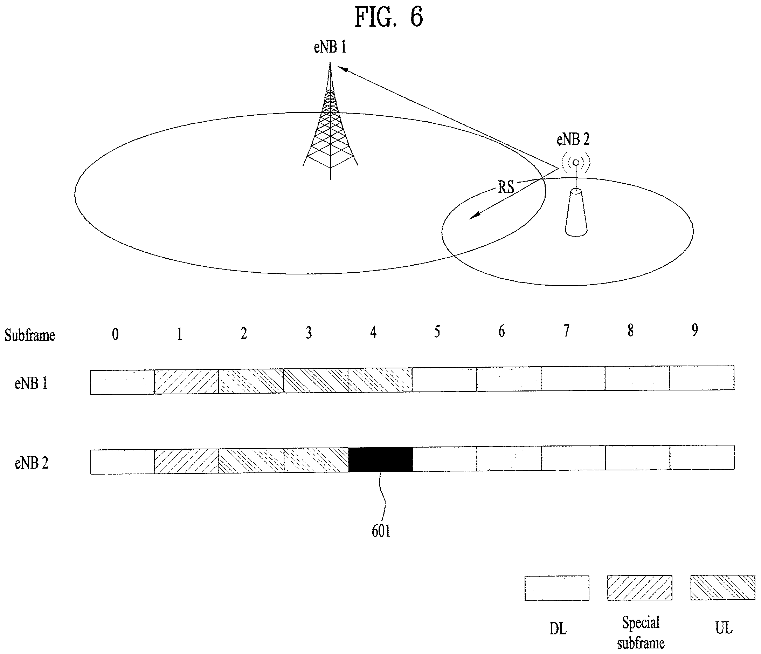

An example of the case described above is illustrated in FIG. 6. Referring to FIG. 6, eNB 1 (which may be a macro eNB) and eNB 2 (which may be a pico eNB) operate according to TDD uplink-downlink configuration 3. Herein, eNB 2 may switch subframe No. 4 (UL subframe) to DL use and transmit a reference signal, and eNB 1 may receive the reference signal and perform channel estimation between the eNBs. In this case, the type of the reference signal and other system operations may depend on whether eNB 1 and eNB 2 communicate with a UE in subframe No. 4 (the first subframe in the description above), which will be discussed case by case below.

### Case 1

In Case 1, eNB 1 and eNB 2 perform transmission and reception of signals other than the reference signal to and from each UE in a first subframe. That is, in a predetermined frame, eNB 1 performs scheduling for UEs (namely, receives signals from UEs in the first subframe), and eNB 2 transmits a DL signal other than the reference signal to the UEs. In other words, inter-eNB measurement is performed during data transmission and reception. Herein, as the reference signal, PSS/SSS, CRS, CSI-RS, SRS, DMRS, RACH, or the like may be used.

If eNB 2 transmits a reference signal based on the DL subframe boundary thereof, this transmission may not be aligned with the reception timing in eNB 1. Accordingly, eNB 2 may apply timing advance in transmitting a reference signal. That is, in a subframe whose usage is changed from uplink to downlink to implement inter-eNB measurement, transmission is performed by applying timing advance. Herein, timing advance may be indicated by eNB 1 through an X2 interface or air interface. For the air interface, the timing advance may be delivered through RRC or a MAC control element (CE). Alternatively, if the location of the eNB does not change, the timing advance may be preconfigured using a fixed parameter. In this case, the timing advance may be signaled to UEs belonging to eNB 2 through RRC, and the UEs may receive a DL signal by applying the timing advance in the first subframe.

### Case 2

In Case 2, eNB 1 receives signals from UEs, and eNB 2 does not transmit any signal except the reference signal in a first subframe. In other words, eNB 2 operates to perform inter-eNB measurement in the first subframe. In this case, if the reference signal is a DL reference signal, this signal may serve as serious interference to UEs belonging to eNB 1. This is because the UEs of eNB 1 performing UL transmission cannot perform rate matching and the like due to the DL reference signal. Accordingly, eNB 2 may use a UL reference signal (a sounding reference signal, demodulation reference signal, a signal related to random access, etc.) as the reference signal. That is, eNB 2 transmits a reference signal in the form of SRS, DMRS or RACH, and eNB 1 detects the reference signal and performs inter-eNB measurement. In this case, the ID of the reference signal needs to be shared by the eNBs. For example, eNB 2 may signal, to eNB 1, the 'Comb' pattern, configuration and the like of the SRS through the X2 interface. Alternatively, eNB 1 may indicate a request/transmission of SRS configuration to eNB 2. Since eNB 2 does not transmit any signal except the reference signal in the first subframe, eNB 2 needs to pre-indicate/pre-advertise, to the UEs belonging thereto, that the subframe will be emptied. To this end, higher layer signaling, almost blank subframe (ABS) configuration or the like may be used. Alternatively, eNB 2 may configure an MBSFN subframe for the UEs belonging to eNB 2. If eNB 2 employs RACH as the reference signal, eNB 2 may estimate timing advance between eNBs using the reference signal. This information may also be used to synchronize the eNBs. RACH is a Zadoff-Chu (ZC) sequence, which is used as PSS in LTE. Accordingly, a signal transmitted from eNB 2 may be similar to RACH or PSS/SSS, or a variant thereof. In addition, the signal may be used to not only perform channel estimation and but also to estimate and compensate time/frequency synchronization between eNBs.

### Case 3

Next, in the first subframe, UEs of eNB 1 may not transmit a UL signal, and eNB 2 may transmit a signal other than the reference signal. In this case, a DL reference signal such as a cell-specific reference signal, channel state information reference signal and demodulation reference signal may be used as the reference signal. A cell synchronization signal may also be used. Since eNB 1 does not transmit any UL signals of the UEs in the first subframe, eNB 2 may not apply timing advance in transmitting the reference signal. If eNB 2 includes a plurality of eNBs transmitting the reference signal without applying timing advance, interference may occur, and accordingly only eNBs whose timing advance values are similar to each other (i.e., less than or equal to a threshold) may be allowed to transmit the reference signal without applying timing advance. On the other hand, eNB 2 may apply the reference signal by applying timing advance. In this case, eNB 2 may signal the timing advance between eNB 2 and eNB 1 to UEs (through RRC). In addition, eNB 1 may inform the UEs, through higher layer signaling, that scheduling is not performed in the first subframe. For example, eNB 1 may configure the subframe as an MBSFN subframe. Alternatively, eNB 1 may configure the first subframe as an ABS subframe.

### Case 4

In this case, in the first subframe, the UEs of eNB 1 may not transmit a UL signal, and eNB 2 may not transmit any signal except the reference signal. In other words, the first subframe is used only to perform measurement between eNBs. Herein, the first subframe may include at least one subframe. As the reference signal, a UL reference signal, a DL reference signal, or a varied UL/DL reference signal whose sequence is transmitted in a resource region different from the resource region for the existing UL/DL reference signal may be used.

Since the first subframe is used only for channel measurement between eNBs, an extended CP may be used regardless of a CP which eNB 1 or eNB 2 has used in a previous subframe. That is, eNB 2 may use the extended CP in transmitting the reference signal. If the extended CP is used, this information may be delivered to UEs through a higher layer signal, a physical layer signal, or the like.

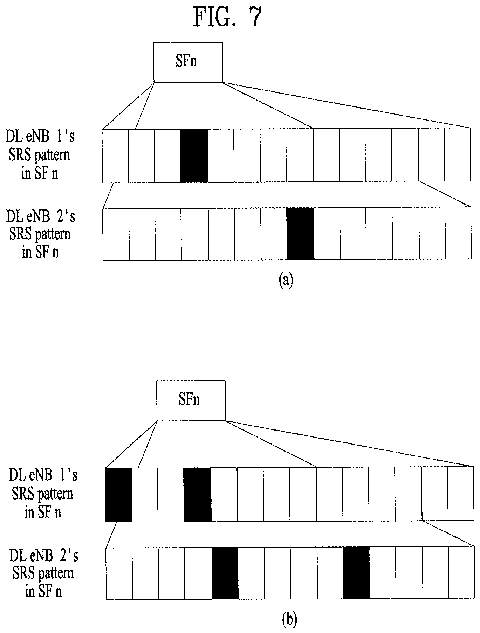

eNB 2 may transmit a reference signal without applying timing advance. For example, eNB 2 may transmit an SRS at the DL boundary thereof. In this case, the SRS, which is transmitted on the last symbol of a subframe, may be received by eNB 1 after the boundary of the subframe. Accordingly, if the SRS is used as the reference signal, the SRS may be transmitted on a symbol different from the last symbol of the subframe. For example, the SRS may be transmitted by eNB 1 on a position at position x=13-a (for a normal CP and extended CP, x=11-a, wherein a is an integer greater than 0). (Here, x is an SC-FDM/OFDN symbol number within a subframe). In this case, a may be set to different values for different eNBs, or may be a value pre-shared through a backhaul or a value indicated through an air interface (a higher layer signal or physical layer signal). In addition, the symbol on which the SRS is transmitted may vary between eNBs, as shown in FIG. 7(a). In addition, the SRS may be repeatedly transmitted on two or more symbols. This is intended to attenuate influence of interference, which may occur since transmission is performed without applying timing advance. The number of repetitions may differ between eNBs. Further, when the SRS is repeatedly transmitted in subframes, the locations of the symbols may vary between eNBs (FIG. 7(b)). In summary, if timing advance is not applied to transmission of the reference signal, an SRS-related sequence may be transmitted on one or more symbols, which may vary between eNBs transmitting the reference signal.

In another example, RACH may be used as the reference signal. In this case, eNB 2 may transmit the RACH at a boundary of a DL subframe. If an eNB performs measurement while performing DL transmission in a subframe immediately before the first subframe, transmission of the RACH may be delayed by some OFDM symbols to secure a guard time. The number of symbols by which the transmission is delayed may be set by the eNB and be shared through a backhaul network.

If eNB 2 transmits a reference signal by applying timing advance, multiple cells may simultaneously transmit reference signals. In this case, eNB 1 receiving the reference signals may assign different reference signal IDs to the eNBs transmitting the reference signals and instruct the eNBs to transmit the reference signals at predetermined times.

In the description above, the first subframe may be a subframe immediately after a subframe configured for uplink use or may be a special subframe. eNB 1 may pre-signal, to eNB 2, a candidate subframe in which measurement between eNBs is enabled, and eNB 2 may transmits the reference signal in at least one of the candidate subframes.

In the case where eNB 2 transmits a reference signal by applying timing advance, eNB 2 may acquire timing advance using the following methods. First, if DL synchronization is achieved between the eNBs, eNB 1 may detect the reference signal of eNB 2 and estimate the round trip time (RTT). eNB 1 needs to scan a certain range to detect the reference signal. To estimate timing advance, eNB 1 may share a time (e.g., a subframe number) at which a reference signal is transmitted, and the type and sequence ID of the reference signal with the other eNBs through a backhaul between the eNBs. Compared to the case of UEs, measurements between eNBs are small in number and static, and thus the periodicity and scan time of a reference signal may be limited to one subframe.

Second, if DL synchronization between eNBs is not achieved, a DL subframe delay value may be pre-shared between the eNBs through a backhaul. Compared to the previous case where synchronization is achieved, the reference signal of eNB 1 may need to be scanned in a wider range. For example, eNB 2 may transmit an SRS, DMRS, PRACH, or the like in a DL subframe thereof, and eNB 1 may perform scanning after two subframes in consideration of DL subframe delay (misalignment) between the eNBs.

In addition, eNB 2 may perform measurement without using timing advance if eNB 2 has not performed measurement between the eNBs previously. Thereafter, timing advance may be estimated and shared between the eNBs, and then measurement between the eNBs may be performed using timing advance.

### Configuration of Devices According to Embodiment of the Present Invention

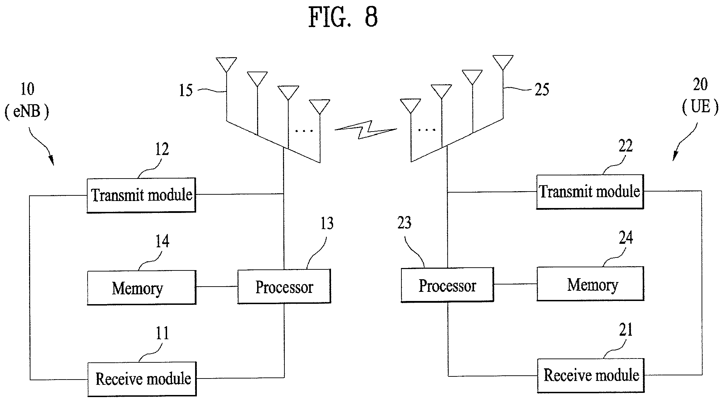

FIG. 8 is a diagram illustrating configurations of a transmission point and a UE according to one embodiment of the present disclosure.

Referring to FIG. 8, a transmission point 10 may include a receive module 11, a transmit module 12, a processor 13, a memory 14, and a plurality of antennas 15. The antennas 15 represent an eNB that supports MIMO transmission and reception. The receive module 11 may receive various signals, data and information from a UE on uplink. The transmit module 12 may transmit various signals, data and information to a UE on downlink. The processor 12 may control overall operation of the transmission point 10.

The processor 13 of the transmission point 10 according to one embodiment of the present disclosure may operate to implement the embodiments described above.

Additionally, the processor 13 of the transmission point 10 may function to operationally process information received by the transmission point 10 or information to be transmitted from the transmission point 10, and the memory 14, which may be replaced with an element such as a buffer (not shown), may store the processed information for a predetermined time.

Referring to FIG. 8, a UE 20 may include a receive module 21, a transmit module 22, a processor 23, a memory 24, and a plurality of antennas 25. The antennas 25 represent a UE that supports MIMO transmission and reception. The receive module 21 may receive various signals, data and information from the eNB on downlink. The transmit module 22 may transmit various signals, data and information to the eNB on uplink. The processor 23 may control overall operation of the UE 20.

The processor 23 of the UE 20 according to one embodiment of the present disclosure may perform operations necessary for implementation of the embodiments described above.

Additionally, the processor 23 of the UE 20 may function to computationally process information received by the UE 20 or information to be transmitted from the UE 20, and the memory 24, which may be replaced with an element such as a buffer (not shown), may store the processed information for a predetermined time.

The configurations of the transmission point and the UE as described above may be implemented such that the above-described embodiments are independently applied or two or more thereof are simultaneously applied, and description of redundant parts is omitted for clarity.

Description of the transmission point 10 in FIG. 8 may be equally applied to a relay as a downlink transmitter or an uplink receiver, and description of the UE 20 may be equally applied to a relay as a downlink receiver or an uplink transmitter.

The embodiments of the present disclosure may be implemented through various means, for example, hardware, firmware, software, or a combination thereof.

When implemented as hardware, a method according to embodiments of the present disclosure may be embodied as one or more application specific integrated circuits (ASICs), one or more digital signal processors (DSPs), one or more digital signal processing devices (DSPDs), one or more programmable logic devices (PLDs), one or more field programmable gate arrays (FPGAs), a processor, a controller, a microcontroller, a microprocessor, etc.

When implemented as firmware or software, a method according to embodiments of the present disclosure may be embodied as a module, a procedure, or a function that performs the functions or operations described above. Software code may be stored in a memory unit and executed by a processor. The memory unit is located at the interior or exterior of the processor and may transmit and receive data to and from the processor via various known means.

Preferred embodiments of the present disclosure have been described in detail above to allow those skilled in the art to implement and practice the present disclosure.

The scope of the disclosure should be determined by the appended claims.

### [Industrial Applicability]

The embodiments of the present disclosure as described above are applicable to various mobile communication systems.

## Claims

1. A method for measuring a channel between a first base station (10, eNB 1) and a second base station (10, eNB 2) by the first base station in an LTE wireless communication system, the method comprising:
receiving, in a subframe, a reference signal from the second base station; and
measuring the channel between the first base station and the second base station based on the reference signal,
wherein, when a user equipment (20) belonging to the first base station transmits an uplink signal in the subframe and the second base station does not transmit a signal except for the reference signal in the subframe, the reference signal is an uplink reference signal, and
wherein, when the user equipment belonging to the first base station does not transmit an uplink signal in the subframe and the second base station transmits a signal other than the reference signal to a user equipment (20) belonging to the second base station in the subframe, the reference signal is a downlink reference signal.

2. The method according to claim 1, wherein, when the first base station and the second base station perform transmission and reception of a signal other than the reference signal with the user equipment belonging to the first base station and the user equipment belonging to the second base station in the subframe, the reference signal is transmitted by applying timing advance.

3. The method according to claim 2, wherein the timing advance is delivered from the first base station.

4. The method according to claim 3, wherein the timing advance is delivered to the user equipment belonging to the second base station though higher layer signaling.

5. The method according to claim 1, wherein the uplink reference signal comprises a sounding reference signal, a demodulation reference signal, and a random access-related signal.

6. The method according to claim 1, wherein the second base station signals, to the user equipment belonging to the second base station, that only the reference signal is transmitted in the subframe.

7. The method according to claim 1, wherein the downlink reference signal comprises a cell-specific reference signal, a channel state information reference signal, and a demodulation reference signal.

8. The method according to claim 1, wherein, when the user equipment belonging to the first base station does not transmit an uplink signal in the subframe, the second base station does not transmit a signal except for the reference signal in the subframe and timing advance is not applied to transmission of the reference signal, the reference signal corresponds to a sequence related to a sounding reference signal and is transmitted over at least one symbol.

9. The method according to claim 8, wherein the at least one symbol differ between base stations transmitting a reference signal.

10. The method according to claim 1, wherein a second subframe immediately before the subframe is a subframe configured for uplink use or a special subframe.

11. The method according to claim 8, wherein an extended cyclic prefix (CP) is used for the subframe.

12. A first base station (10, eNB 1) for measuring a channel between the first base station and a second base station (10, eNB 2) in an LTE wireless communication system, the first base station comprising:
a transmit module (12); and
a processor (13),
wherein the processor is configured to:
control the transmit module to receive, in a subframe, a reference signal from the second base station; and
measure the channel between the first station and the second base station based on the reference signal,
wherein, when a user equipment (20) belonging to the first base station transmits an uplink signal in the subframe and the second base station does not transmit a signal except for the reference signal in the subframe, the reference signal is an uplink reference signal, and
wherein, when the user equipment belonging to the first base station does not transmit an uplink signal in the subframe and the second base station transmits a signal other than the reference signal to a user equipment (20) belonging to the second base station in the subframe, the reference signal is a downlink reference signal.

## Patentansprüche

1. Verfahren zum Messen eines Kanals zwischen einer ersten Basisstation (10, eNB 1) und einer zweiten Basisstation (10, eNB 2) durch die erste Basisstation in einem LTE-Drahtloskommunikationssystem, wobei das Verfahren umfasst:
Empfangen eines Referenzsignals von der zweiten Basisstation in einem Unterrahmen; und
Messen des Kanals zwischen der ersten Basisstation und der zweiten Basisstation basierend auf dem Referenzsignal,
wobei, wenn ein zur ersten Basisstation gehörendes Benutzergerät (20) ein Aufwärtsstreckensignal in dem Unterrahmen sendet und die zweite Basisstation außer dem Referenzsignal in dem Unterrahmen kein Signal sendet, das Referenzsignal ein Aufwärtsstreckenreferenzsignal ist und
wobei, wenn das zur ersten Basisstation gehörende Benutzergerät kein Aufwärtsstreckensignal in dem Unterrahmen sendet und die zweite Basisstation ein Signal mit Ausnahme des Referenzsignals an ein zur zweiten Basisstation gehörendes Benutzergerät (20) in dem Unterrahmen sendet, das Referenzsignal ein Abwärtsstreckenreferenzsignal ist.

2. Verfahren nach Anspruch 1, wobei, wenn die erste Basisstation und die zweite Basisstation ein Senden und Empfangen eines Signals mit Ausnahme des Referenzsignals mit dem zur ersten Basisstation gehörenden Benutzergerät durchführt und das zur zweiten Basisstation gehörende Benutzergerät im Unterrahmen sendet, das Referenzsignal durch Anwenden eines Zeitvorlaufs gesendet wird.

3. Verfahren nach Anspruch 2, wobei der Zeitvorlauf von der ersten Basisstation geliefert wird.

4. Verfahren nach Anspruch 3, wobei der Zeitvorlauf an das zur zweiten Basisstation gehörende Benutzergerät durch Signalisierung einer höheren Schicht geliefert wird.

5. Verfahren nach Anspruch 1, wobei das Aufwärtsstreckenreferenzsignal ein Sondierungsreferenzsignal, ein Demodulationsreferenzsignal und ein Direktzugriffssignal umfasst.

6. Verfahren nach Anspruch 1, wobei die zweite Basisstation dem zur zweiten Basisstation gehörenden Benutzergerät signalisiert, dass nur das Referenzsignal in dem Unterrahmen gesendet wird.

7. Verfahren nach Anspruch 1, wobei das Abwärtsstreckenreferenzsignal ein zellenspezifisches Referenzsignal, ein Kanalzustandsinformationsreferenzsignal und ein Demodulationsreferenzsignal umfasst.

8. Verfahren nach Anspruch 1, wobei, wenn das zur ersten Basisstation gehörende Benutzergerät kein Aufwärtsstreckensignal in dem Unterrahmen sendet, die zweite Basisstation kein Signal außer dem Referenzsignal in dem Unterrahmen sendet und der Zeitvorlauf nicht auf eine Übertragung des Referenzsignals angewendet wird, das Referenzsignal einer Sequenz mit Bezug auf ein Sondierungsreferenzsignal entspricht und über das mindestens eine Symbol gesendet wird.

9. Verfahren nach Anspruch 8, wobei sich das mindestens eine Symbol zwischen Basisstationen unterscheidet, die ein Referenzsignal senden.

10. Verfahren nach Anspruch 1, wobei ein zweiter Unterrahmen unmittelbar vor dem Unterrahmen ein für eine Aufwärtsstrecken-Verwendung konfigurierter Unterrahmen oder ein spezieller Unterrahmen ist.

11. Verfahren nach Anspruch 8, wobei ein erweitertes zyklisches Präfix, CP, für den Unterrahmen verwendet wird.

12. Erste Basisstation (10, eNB 1) zum Messen eines Kanals zwischen der ersten Basisstation und einer zweiten Basisstation (10, eNB 2) in einem LTE-Drahtloskommunikationssystem, wobei die erste Basisstation umfasst:
ein Sendemodul (12); und
einen Prozessor (13),
wobei der Prozessor eingerichtet ist zum:
Steuern des Sendemoduls, um ein Referenzsignal von der zweiten Basisstation in einem Unterrahmen zu empfangen; und
Messen des Kanals zwischen der ersten Basisstation und der zweiten Basisstation basierend auf dem Referenzsignal,
wobei, wenn ein zur ersten Basisstation gehörendes Benutzergerät (20) ein Aufwärtsstreckensignal in dem Unterrahmen sendet und die zweite Basisstation außer dem Referenzsignal in dem Unterrahmen kein Signal sendet, das Referenzsignal ein Aufwärtsstreckenreferenzsignal ist und
wobei, wenn das zur ersten Basisstation gehörende Benutzergerät kein Aufwärtsstreckensignal in dem Unterrahmen sendet und die zweite Basisstation ein Signal mit Ausnahme des Referenzsignals an ein zur zweiten Basisstation gehörendes Benutzergerät (20) in dem Unterrahmen sendet, das Referenzsignal ein Abwärtsstreckenreferenzsignal ist.

## Revendications

1. Procédé destiné à mesurer un canal entre une première station de base (10, eNB 1) et une deuxième station de base (10, eNB 2) par la première station de base dans un système de communication sans fil LTE, le procédé comprenant les étapes :
la réception, dans une sous-trame, d'un signal de référence en provenance de la deuxième station de base ; et
la mesure du canal entre la première station de base et la deuxième station de base sur la base du signal de référence,
dans lequel, lorsqu'un équipement utilisateur (20) appartenant à la première station de base transmet un signal de liaison montante dans la sous-trame et que la deuxième station de base ne transmet pas de signal excepté pour le signal de référence dans la sous-trame, le signal de référence est un signal de référence de liaison montante, et
dans lequel, lorsque l'équipement utilisateur appartenant à la première station de base ne transmet pas de signal de liaison montante dans la sous-trame et que la deuxième station de base transmet un signal autre que le signal de référence à l'équipement utilisateur (20) appartenant à la deuxième station de base dans la sous-trame, le signal de référence est un signal de référence de liaison descendante.

2. Procédé selon la revendication 1, dans lequel, lorsque la première station de base et la deuxième station de base réalisent une transmission et une réception d'un signal autre que le signal de référence avec l'équipement utilisateur appartenant à la première station de base et l'équipement utilisateur appartenant à la deuxième station de base dans la sous-trame, le signal de référence est transmis en appliquant une avance temporelle.

3. Procédé selon la revendication 2, dans lequel l'avance temporelle est délivrée à partir de la première station de base.

4. Procédé selon la revendication 3, dans lequel l'avance temporelle est délivrée à l'équipement utilisateur appartenant à la deuxième station de base par l'intermédiaire d'une signalisation de couche supérieure.

5. Procédé selon la revendication 1, dans lequel le signal de référence de liaison montante comprend un signal de référence de sondage, un signal de référence de démodulation et un signal lié à un accès aléatoire.

6. Procédé selon la revendication 1, dans lequel la deuxième station de base signale à l'équipement utilisateur appartenant à la deuxième station de base, que seul le signal de référence est transmis dans la sous-trame.

7. Procédé selon la revendication 1, dans lequel le signal de référence de liaison descendante comprend un signal de référence spécifique à la cellule, un signal de référence d'information d'état de canal, et un signal de référence de démodulation.

8. Procédé selon la revendication 1, dans lequel, lorsque l'équipement utilisateur appartenant à la première station de base ne transmet pas un signal de liaison montante dans la sous-trame, que la deuxième station de base ne transmet pas un signal à l'exception du signal de référence dans la sous-trame et que l'avance temporelle n'est pas appliquée à la transmission du signal de référence, le signal de référence correspond à une séquence associée à un signal de référence de sondage et est transmis sur au moins un symbole.

9. Procédé selon la revendication 8, dans lequel le au moins un symbole diffère entre les stations de base transmettant un signal de référence.

10. Procédé selon la revendication 1, dans lequel une deuxième sous-trame immédiatement avant la sous-trame est une sous-trame configurée pour une utilisation en liaison montante ou une sous-trame spéciale.

11. Procédé selon la revendication 8, dans lequel un préfixe cyclique étendu (CP) est utilisé pour la sous-trame.

12. Première station de base (10, eNB 1) destinée à mesurer un canal entre la première station de base et une deuxième station de base (10, eNB 2) dans un système de communication sans fil LTE, la première station de base comprenant :
un module de transmission (12) ; et
un processeur (13),
dans laquelle le processeur est configuré pour :
commander le module de transmission pour recevoir, dans une sous-trame, un signal de référence en provenance de la deuxième station de base ; et
mesurer le canal entre la première station et la deuxième station de base sur la base du signal de référence,
dans lequel, lorsqu'un équipement utilisateur (20) appartenant à la première station de base transmet un signal de liaison montante dans la sous-trame et que la deuxième station de base ne transmet pas de signal excepté pour le signal de référence dans la sous-trame, le signal de référence est un signal de référence de liaison montante, et
dans lequel, lorsque l'équipement utilisateur appartenant à la première station de base ne transmet pas de signal de liaison montante dans la sous-trame et que la deuxième station de base transmet un signal autre que le signal de référence à un équipement utilisateur (20) appartenant à la deuxième station de base dans la sous-trame, le signal de référence est un signal de référence de liaison descendante.
